# FASCICULE DE BREVET EUROPEEN

(11) **EP 0 776 815 B1**
(45) Date de publication et mention de la délivrance du brevet: **22.03.2000**
(21) Numéro de dépôt: 96402545.6
(22) Date de dépôt: 26.11.1996
(51) Int. Cl.: B62D 53/00, B62D 63/02

(54) **Procédé de propulsion d'un véhicule à déplacement par reptation et véhicule pour sa mise en oeuvre**
Antriebsverfahren für ein Fahrzeug mit schlängelnder Fortbewegung und Fahrzeug zur Durchführung des Verfahrens
Method for the propulsion of a vehicle with snaking movement and vehicle for carrying out the method

(30) Priorité: 29.11.1995 FR 9514099
(43) Date de publication de la demande: 04.06.1997
(73) Titulaire: THOMSON-CSF, 75008 Paris (FR)
(72) Inventeur: Guyvarch, Jean-Paul, Thomson-CSF, SCPI, 94117 Arcueil Cedex (FR)
(74) Mandataire: Albert, Claude

(56) Documents cités:
- EP-A- 0 305 299
- EP-A- 0 552 027
- DE-A- 3 811 795

## Description

La présente invention concerne les techniques relatives aux véhicules qui sont constitués d'une série d'éléments articulés l'un sur l'autre successivement.

On connaît déjà de tels véhicules longiformes, à éléments articulés, qui sont généralement conçus pour pouvoir se déplacer par reptation, en s'adaptant en permanence au terrain visité et en suivant des trajets variables dans des lieux d'accès difficiles, éventuellement en terrain accidenté, sans qu'il soit besoin que ces trajets soient déterminés à l'avance.

Le mode connu de propulsion d'un tel véhicule procède à la manière des invertébrés ou serpents de taille relativement courte que l'on trouve dans la nature, en fixant des points d'appui alternativement en tête et en queue d'éléments dont la longueur suivant l'axe du véhicule est variable. Simultanément, on provoque l'allongement des éléments quand ils sont fixes en queue et libres en tête, et au contraire leur raccourcissement quand ils sont fixes en tête et libres en queue. La progression a donc lieu par une déformation rectiligne créant des ondes longitudinales d'élongation/rétraction qui se propagent le long du véhicule.

A une telle conception, le document de brevet FR-A-2 638 699, qui s'intéresse plus spécialement à un véhicule de circulation dans des conduites, ajoute une capacité de déformation de chaque élément par courbure par rapport à l'axe des éléments voisins, ce qui permet leur inclinaison relative. A cet effet chaque élément est lui-même constitué d'une série d'anneaux mobiles en inclinaison l'un par rapport à l'autre. Leur fonction est simplement d'apporter une possibilité d'élongation différentielle transversalement à l'élément, comme dans un soufflet à parois souples.

Par distinction avec cet état de la technique, le mode de propulsion utilisé suivant la présente invention s'inspire plutôt de ce que l'on connaît des animaux vertébrés que sont les serpents longs et fins, tels les couleuvres, les cobras en milieu terrestre, ou les anguilles en milieu aquatique. Leur reptation est caractérisée par une configuration ondulante, à amplitudes latérales, qui laisse une trace sinueuse sur leur passage. En pratique, le corps n'a pas la propriété de s'allonger ou se raccourcir, et il n'apparaît pas présenter de points d'appui fixe sélectifs. La progression sur le sol s'explique par un appui des flancs sur les aspérités rencontrées sur sol rugueux ou accidenté, l'équivalent en milieu liquide passant par les forces de réaction hydrodynamiques. A chaque ondulation, la longueur des segments étant invariable, c'est seulement l'un des flancs de chaque segment du corps qui s'allonge cependant que l'autre se raccourcit, puis ces changements s'inversent pour l'ondulation suivante, chaque point du corps passant là où la tête est passée précédemment.

Par ses caractéristiques, telles qu'elles seront décrites et revendiquées ci-après, l'invention vise notamment à la conception d'un véhicule à éléments successifs articulés entre eux dans lequel ces éléments sont avantageusement à structure propre rigide, et sont ainsi aisément capables de supporter des objets à transporter.

D'autre part, sans exclure strictement les adaptations au cas d'un déplacement à l'intérieur de conduites, elle s'intéresse préférentiellement aux applications en des lieux ouverts, avec notamment le souci de permettre des interventions à distance, en milieu inaccessible ou hostile, avec précision, sécurité et discrétion.

Dans un tel contexte, l'invention vise aussi à assurer commodité et simplicité de fonctionnement, ainsi qu'un faible coût, tant en matériel qu'en frais d'entretien et consommation d'énergie.

Pour satisfaire à ces objectifs et obtenir d'autres avantages qui ressortiront plus loin, l'invention propose un procédé de propulsion d'un véhicule à déplacement par reptation, un tel véhicule étant essentiellement constitué par une série d'éléments articulés entre eux, procédé suivant lequel on règle périodiquement l'orientation des éléments successifs suivant des séquences répétitives dans le temps au cours desquelles on impose à chaque élément une orientation tendant à reproduire itérativement l'orientation que présentait l'élément le précédant dans ladite série à la séquence précédente, et en ce que l'on commande l'orientation d'un segment de tête en la faisant varier au cours du temps suivant une loi d'initialisation qui est ainsi transmise de proche en proche par lesdits éléments et qui est déterminée de sorte à donner à l'ensemble du véhicule en marche une configuration spatiale définie suivant un trajet sinueux à ondulations latérales alternativement de part et d'autre d'une trajectoire moyenne.

Pour la mise en oeuvre du procédé ainsi défini, l'invention a également pour objet un véhicule à déplacement par reptation, essentiellement constitué par une série d'éléments articulés entre eux et associé à un ensemble de commande de sa propulsion par le procédé ci-dessus, qui se caractérise en ce qu'il comporte des moyens de variation réglable de l'orientation de chaque élément, des moyens d'itération tendant à imposer à chaque élément, à chacune de séquences répétitives, l'orientation qu'avait l'élément précédent de la série à la séquence précédente, et des moyens d'initialisation pour faire varier au cours du temps l'orientation d'un segment de tête suivant une loi d'initialisation telle que, par transmission itérative d'élément à élément, le véhicule en marche suive une configuration spatiale de trajet sinueux prédéterminée.

Dans le cadre des modes de réalisation pratique de l'invention les plus adaptés au monde industriel dans leur conception, leur fonctionnement et leur utilisation, l'orientation de chaque élément est réglée automatiquement au niveau d'une articulation reliant chaque élément à l'élément suivant dans la série d'éléments constituant le véhicule, par modification d'un angle d'inclinaison relative entre éléments successifs caractéristique de leur inclinaison en gisement l'un par rapport à l'autre.

L'invention se traduit alors en termes de procédé par le fait que l'on règle périodiquement l'orientation relative des éléments successifs chacun par rapport au précédent de préférence par commande de son articulation avec l'élément suivant des séquences répétitives dans le temps au cours desquelles on impose à chaque élément une inclinaison par rapport au précédent qui tend à reproduire l'inclinaison relative que présentaient les deux éléments les précédant immédiatement à la séquence précédente, et en ce que l'on commande entre un segment de tête et un premier d'éléments intermédiaires de la série, une inclinaison relative variant d'une séquence à l'autre selon une loi prédéterminée, de sorte à conférer à l'ensemble du véhicule, par progression de proche en proche jusqu'à un segment de queue, une configuration de trajet sinueux formant des ondulations latérales alternativement en courbe de part et d'autre d'une trajectoire moyenne à suivre.

En outre, le segment de tête est avantageusement commandé, de préférence par réglage d'au moins une articulation entre éléments successifs y associée, de sorte à lui donner une orientation absolue de guidage de la direction globale de déplacement du véhicule vers un cap moyen prédéterminé, pouvant varier au cours du temps et en fonction d'un objectif à atteindre, non nécessairement par le circuit le plus direct.

En parallèle, l'invention se traduit alors également en un véhicule à déplacement par reptation, essentiellement constitué par une série d'éléments articulés entre eux, qui se caractérise en ce qu'il comporte des moyens de commande de variations réglables de l'orientation de chaque élément, agissant sur des moyens d'articulation le reliant à l'élément suivant dans ladite série par modification de son angle d'inclinaison relative par rapport audit élément suivant, des moyens d'itération tendant à imposer à chaque élément, à chacune des séquences répétitives, l'inclinaison qu'avait l'élément précédent de la série à la séquence précédente, et des moyens d'initialisation pour imposer entre un segment de tête et un premier d'éléments intermédiaires de ladite série, une inclinaison relative formant un angle prédéterminé, tendant à conférer à l'ensemble du véhicule, par progression de proche en proche jusqu'à un segment de queue, une configuration de trajet sinueux formant des ondulations latérales alternativement en courbe de part et d'autre d'une trajectoire moyenne à suivre.

L'invention se concrétise avantageusement en un petit système permettant de transporter des équipements divers pour les amener à proximité de leur site d'utilisation à travers des irrégularités de terrains imprévus.

Les équipements en question peuvent être notamment : - des moyens d'observation et d'écoute (capteurs de type optique, acoustique, radar ou radiométrique, sismique, etc.) ; - des moyens de brouillage, de leurrage, de diversion ; - des moyens de destruction ou de sabotage (charges explosives ou incendiaires, gaz, etc.).

Les terrains sur lesquels le véhicule doit se déplacer, de préférence sur des distances relativement faibles, par exemple de centaines de mètres à quelques kilomètres, peuvent être de natures très diverses. L'utilité de l'invention se fera sentir particulièrement dans les cas de terrains difficiles, irréguliers ou encombrés, comme dans les situations de végétation dense, de régions marécageuses, de zones désertiques ou montagneuses, ou encore de zones urbaines avec de nombreux obstacles qui sont alors non naturels.

Le fonctionnement du véhicule suivant l'invention exploite les efforts de réaction sur des appuis latéraux, tels que ceux qui peuvent être dus à la rugosité du terrain, à des organes de frottement au sol, ou à la force hydrodynamique en cas de milieu liquide, dans la mesure où ils engendrent une composante utile dans le sens de l'avancement de l'ensemble des éléments du véhicule suivant l'axe de la configuration sinueuse nominale que le véhicule est contraint d'adopter en se déformant d'un instant à l'autre. En cela, il s'inspire spécifiquement de celui des modes de reptation des serpents longs suivant lequel les mouvements sont coordonnés de telle façon que chaque tronçon cherche à recopier la courbure du tronçon qui le précède, en suivant le même sillage.

L'analogie se traduit par le fait que suivant l'invention, dans ses modes de réalisation préférés, on modifie à chaque instant (ou séquence des commandes répétitives), les angles d'inclinaison entre deux éléments successifs du véhicule en marche, en prenant comme valeurs de consigne de configuration nominale théorique, les angles d'inclinaison observés à l'instant précédent entre les deux éléments les précédant immédiatement. Les commandes de modification sont réitérées à chaque séquence, avec un décalage d'un cran le long de la série d'éléments d'un segment de tête vers un segment de queue.

C'est ainsi qu'à la manière d'un serpent long, sur une surface offrant une résistance au glissement, les éléments successifs du véhicule se déplacent tous en même temps, par translation l'un vers l'autre suivant un trajet sinueux, stable dans l'espace, qui forme des ondulations se départant latéralement de part et d'autre de la direction globale de déplacement du véhicule, conformément à la configuration sinueuse imposée depuis le segment de tête. Chaque élément prend la place de celui qui l'a précédé dans le temps, en restant dans le même sillage de la configuration sinueuse dans l'espace.

Chaque ondulation de cette configuration sinueuse implique nécessairement au moins deux éléments, et de préférence au moins trois éléments successifs entre deux points d'inflexion de la configuration sur une demi-période spatiale. De préférence toutefois, ladite configuration est établie de sorte à impliquer de 5 à 10 éléments par ondulation latérale, ce qui s'obtient avantageusement à partir de la commande d'orientation intrinsèque du segment de tête, complétée autant que de besoin par des corrections de configuration et/ou de trajectoire appliquées aux éléments individuels.

Ainsi, suivant des caractéristiques secondaires de l'invention, à mettre en oeuvre séparément ou en combinaison, il est prévu de corriger à chaque séquence le réglage de l'orientation itérative imposée à chaque élément en fonction d'erreurs affectant en fonctionnement la transmission de la définition initiale donnée à la configuration sinueuse fixe dans l'espace, et de corriger à chaque séquence la commande de l'orientation d'initialisation du segment de tête en fonction d'une direction de cap moyen et/ou d'une trajectoire moyenne à suivre par ladite configuration spatiale.

Du point de vue de la construction du véhicule, il est le plus souvent souhaitable, dans un compromis entre l'efficacité théorique de fonctionnement et les impératifs d'ordre mécanique et économique, que les éléments successifs soient à structure rigide et présentent une forme allongée identique entre leurs articulations l'un sur l'autre, du moins en ce qui concerne les éléments intermédiaires en série entre segment de tête et segment de queue. Le plus important reste cependant que le véhicule dans son ensemble soit longiforme, avec préférentiellement une longueur globale d'au moins 10 fois la largeur en section des éléments.

En effet, dans les cas pratiques d'application de l'invention les plus fréquents, le véhicule se déplace sur un terrain solide qui présente toujours des inhomogénéités permettant des appuis latéraux, ne serait-ce que sur des brins d'herbe ou des cailloux, ce qui suffit à entraîner en conséquence la progression vers l'avant d'un véhicule longiforme propulsé suivant l'invention, grâce à l'apparition d'une résultante des contraintes de résistance au déplacement orientée vers l'avant du véhicule, dont la composante utile suivant la direction longitudinale de la trajectoire moyenne est plus importante que la composante latérale.

En milieu aquatique, de façon équivalente, c'est essentiellement par une longueur de l'ensemble du véhicule nettement plus grande que sa largeur que l'on obtient la dissymétrie utile des réactions hydrodynamiques, avec un coefficient de résistance à la pénétration latérale plus fort qu'à la pénétration longitudinale. D'ailleurs, en milieu terrestre mais sablonneux homogène, le fonctionnement est similaire à celui décrit pour un milieu aquatique.

Suivant des formes de réalisation préférées de l'invention, chaque élément est au moins aussi long que large, sa longueur étant notamment environ double de sa largeur, et le véhicule comporte au moins 4, et de préférence au moins 6 éléments, ce qui permet de commander le réglage des angles d'inclinaison relative en gisement des articulations intermédiaires pour imposer que dans son ensemble, le véhicule prenne en permanence une configuration à au moins deux points d'inflexion, soit une forme ondulante d'au moins une période spatiale.

En pratique, on a pu observer que l'efficacité de la reptation (rendement d'exploitation des contraintes en forces de propulsion vers l'avant) demande avantageusement un rapport entre résistance latérale au mouvement et résistance longitudinale au moins égal à 2,5, en sa valeur moyenne sur la longueur du véhicule. Ce rapport présente de préférence une valeur nettement supérieure, tout en restant dans les limites d'un compromis avec les conditions de la pratique, car plus il est élevé plus le rendement de reptation est proche de 1, et donc meilleur.

D'autre part, sauf pour une propulsion en milieu aquatique (où une forme ondulante relativement aplatie et/ou à une seule alternance de courbure peut suffire), des considérations de dépenses énergétiques et de stabilité du véhicule en marche conduisent à augmenter sensiblement tant le nombre d'alternances du trajet sinueux suivi que le nombre d'éléments articulés par demi-alternance.

Ainsi, le véhicule de l'invention comporte de préférence de 10 à 50 éléments, pour une capacité d'articulation de chaque élément sur le précédent autorisant un angle maximum d'inclinaison relative entre eux d'au moins 40 et d'au plus 70 degrés (donc une variation de leurs orientations relatives de ± 20 à 35 degrés, en plus ou moins de part et d'autre d'orientations respectives correspondant à leur disposition en alignement rectiligne).

Un tel véhicule pourra être par exemple, et de manière particulièrement avantageuse en pratique, commandé pour tendre à chaque instant vers une forme sinusoïdale dont chaque période d'onde spatiale occupe de 10 à 20 éléments (soit de 5 à 10 éléments par ondulation latérale) et dont la pente aux points d'inflexion est fixée au départ, pour une trajectoire moyenne rectiligne, à une valeur voisine de 45 degrés, ou plus généralement de l'ordre de 40 à 60 degrés d'angle.

Couramment, le réglage de l'orientation passera par le réglage de l'inclinaison de chaque élément par rapport à l'élément précédent, les organes automoteurs de commande de chacune des articulations entre élément antérieur et élément postérieur étant portés par l'élément postérieur à l'articulation considérée.

Suivant une autre caractéristique de l'invention, le véhicule objet de l'invention comporte un segment de tête qui est au moins partiellement télécommandé, notamment pour dévier la trajectoire moyenne vers un cap moyen instantané qui peut s'écarter d'une trajectoire rectiligne liée strictement aux valeurs de consigne tendant à imposer la configuration sinueuse nominale, alors que les autres éléments sont au moins partiellement automoteurs en ce qui concerne le réglage à chaque séquence de leur angle d'inclinaison propre par rapport à l'élément précédent.

Le segment de tête est avantageusement associé à des moyens capteurs capables de détecter des obstacles se présentant devant lui et à des moyens de commande automatique de son orientation en fonction d'une telle détection, de sorte à lui faire contourner de tels obstacles. Ainsi, l'invention prévoit de corriger la commande d'orientation du segment de tête et/ou la définition de ladite configuration, en cas de détection d'un obstacle à contourner par le véhicule.

En effet, il est à noter que les mêmes obstacles risquent fort de devoir être contournés par des éléments suivants, ceci dépendant de la puissance fournie pour le réglage de leur orientation et des amplitudes des ondulations de la configuration sinueuse. Dans ce genre de circonstances, les obstacles apporteront une surface d'appui supplémentaire en résistance aux efforts latéraux et la configuration théorique imposée à l'origine sera modifiée localement, mais elle sera ensuite rétablie de proche en proche séquence par séquence, à partir de l'orientation redonnée au segment de tête après l'obstacle.

C'est d'ailleurs la présence de telles surfaces d'appui latéral sur les deux flancs d'un véhicule suivant l'invention, adapté à une propulsion à l'intérieur de conduites, qui permettront à ce véhicule d'avancer le long de la conduite même si celle-ci est de diamètre réduit, grâce à la puissance mécanique transmise pour régler l'orientation de chaque élément, alors même que la configuration théorique visée n'aurait pas la place d'y loger l'amplitude de ses ondes spatiales.

Dans le cas où il est prévu, suivant l'une des caractéristiques secondaires de l'invention, de pouvoir modifier sélectivement l'orientation relative entre le segment de tête et un premier des éléments intermédiaires, en plus de ce qui est lié aux besoins de la loi d'initialisation définissant la configuration sinueuse nominale, cette modification peut être effectuée de manière téléguidée ou être emportée par un programme installé sur microprocesseur au sein du véhicule.

En fonction d'un lieu à atteindre par le véhicule ou d'un circuit particulier à suivre, ceci permet d'influer sur la configuration ondulante théoriquement imposée, de sorte à dévier la trajectoire moyenne suivie par l'ensemble par rapport à ce qui serait autrement une trajectoire constante, de préférence rectiligne.

C'est également le segment de tête, cette notion s'étendant le cas échéant à plusieurs éléments à sa suite, qu'il est avantageux d'équiper de moyens de commande d'une orientation en site, assurée au niveau d'articulations entre éléments successifs mettant en jeu deux axes d'articulations perpendiculaires.

En ce qui concerne les autres éléments, dits intermédiaires, il est en général suffisant de les équiper de moyens moteurs individuels de leurs articulations respectives qui sont commandés de sorte que l'inclinaison en gisement de chaque élément relativement au précédent reproduise celle de l'élément qui l'a précédé après un intervalle de temps d'une séquence, alors qu'il y est avantageusement ajouté une capacité d'articulation en site qui reste libre, sans commande particulière de l'inclinaison relative en site.

La procédure des commandes d'itération ne pose pas de difficultés dans la mesure où l'on sait faire appel aux moyens actuellement disponibles pour sa mise en oeuvre par programmation informatique.

Le rythme des séquences est choisi, en fonction des caractéristiques dimensionnelles du véhicule et de la configuration imposée, pour obtenir la vitesse de déplacement globale désirée, qui correspond à la projection de la distance entre articulations sur l'axe de la configuration, moyennée sur la longueur du véhicule.

Suivant une autre caractéristique de l'invention, la puissance à délivrer aux moyens motorisés de chacun des éléments est calculée non seulement en fonction des pertes d'énergie dans les transmissions mécaniques et des pertes dans la recopie des angles d'inclinaison, venant notamment du rendement d'exploitation des contraintes, mais également en fonction des résistances à vaincre sur la surface d'appui.

Cette surface d'appui sera en général dépendante de la nature du terrain dans le cas d'un déplacement impliquant une adhérence à un sol solide, mais il s'agira éventuellement d'une résistance aux déplacements dans un milieu fluide dans le cas d'un véhicule aquatique.

L'invention s'applique notamment au transport de charges en des lieux difficiles d'accès, étant entendu que les charges peuvent être au moins partiellement constituées par des appareils d'examen et de mesure transmettant à distance les informations qu'ils captent, et que de telles informations peuvent être exploitées par des moyens informatiques pour modifier les conditions de déplacements.

Le déplacement global du véhicule est assuré à la manière d'un serpent par un mouvement de reptation qui s'adapte aisément sur tous types de terrains, avec robustesse et discrétion. Une inclinaison du segment de tête permet au véhicule de franchir plus facilement des obstacles qui n'ont pas été détectés, de sorte que le véhicule présente une grande efficacité de pénétration dans des lieux encombrés comme peuvent l'être par exemple les forêts tropicales.

Suivant une autre caractéristique de l'invention, les moyens d'articulation entre éléments successifs et/ou les organes mécaniques assurant les variations de leurs orientations respectives, passant alors par modification de l'angle d'inclinaison relative de l'un sur l'autre, sont conçus et construits de manière à limiter la valeur de cette inclinaison à un maximum de 40 à 60 degrés en gisement (ce qui correspondant à une variation d'orientation relative de ± 20 à 30 degrés par rapport à une position alignée), et à un maximum de 20 à 40 degrés en site (soit une variation d'orientation relative de ± 10 à 20 degrés, en plus ou moins de part et d'autre d'une disposition en alignement rectiligne).

L'invention sera maintenant décrite de manière plus détaillée dans le cadre d'un exemple particulier de réalisation pratique, concernant un véhicule à éléments articulés entre eux destiné à être commandé suivant l'invention pour se propulser sur terre, de manière programmée et éventuellement téléguidée, afin par exemple d'amener à pied d'oeuvre des équipements d'observation de l'environnement ou des équipements d'intervention à distance, en un lieu qui interdirait la présence d'un conducteur humain sur le véhicule lui-même.

Dans le cours de cette description, on fera référence aux figures des dessins annexés, parmi lesquelles :
- La figure 1 représente schématiquement deux éléments successifs du véhicule de l'invention, dans l'essentiel de leur structure matérielle et de leur articulation l'un sur l'autre, la figure les montrant en vue latérale dans leur position reposant sur le sol ;
- La figure 2 représente schématiquement les mêmes éléments dans une vue de dessus qui les montre inclinés l'un par rapport à l'autre en gisement ;
- La figure 3 illustre la configuration théorique, ou nominale, du véhicule, considéré en cours de déplacement suivant une trajectoire moyenne supposée rectiligne pour la fraction visible de la série d'éléments le constituant ;
- La figure 4 montre un schéma fonctionnel par blocs des principales commandes et réglages automatiques gérés en utilisant des programmes informatiques ;
- La figure 5 est une vue schématique en coupe montrant la section d'un élément dans une variante de réalisation.

Le véhicule décrit est constitué d'une série d'éléments qui sont successivement articulés l'un sur l'autre et qui comprennent, par exemple, de 10 à 50, et préférentiellement de 20 à 30 éléments intermédiaires derrière un segment de tête S.

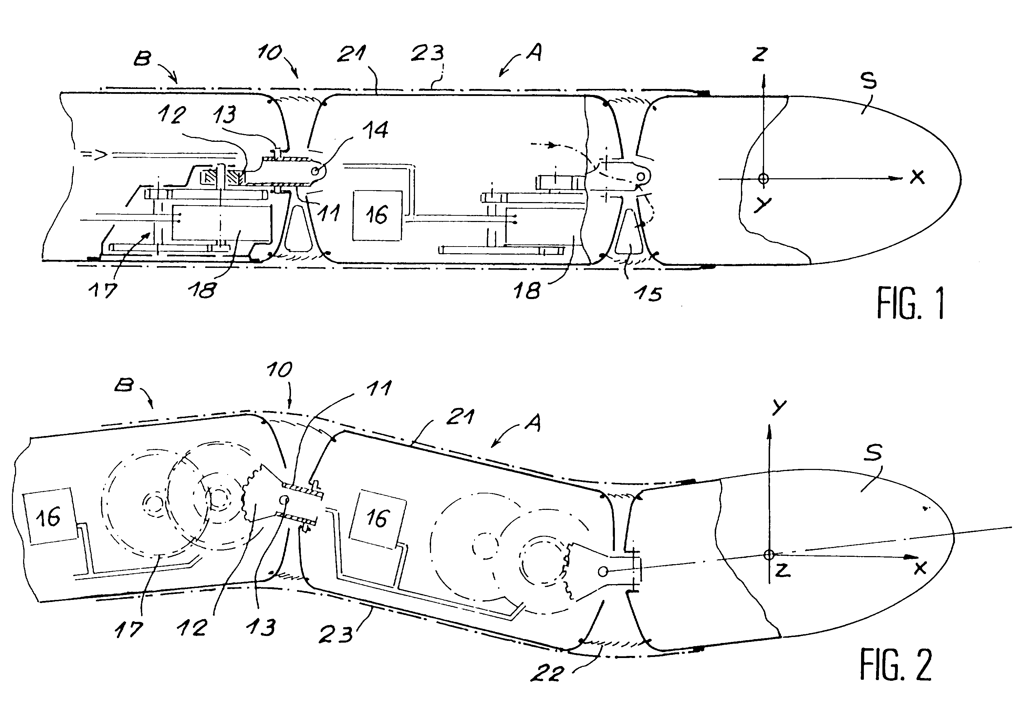

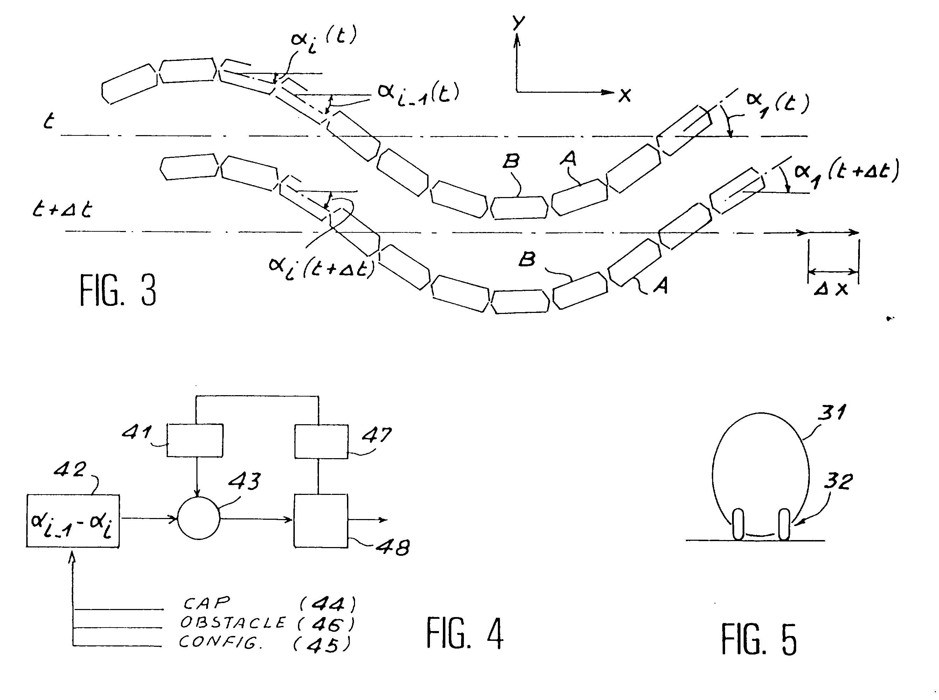

Ce dernier est montré sur les figures 1 et 2 comme étant plus effilé que les autres vers l'avant, ce qui rend plus facile au véhicule de se faufiler à travers des broussailles. Il n'apparaît pas sur la figure 3, pas plus que le segment de queue qui termine le véhicule.

Le véhicule dans son ensemble est d'autant plus longiforme que chacun de ses éléments, du moins en ce qui concerne les éléments intermédiaires, est lui-même de forme allongée. A titre d'exemple ils sont ici deux fois plus longs que larges dans la direction longitudinale entre leurs articulations, avec une longueur qui, suivant le volume des objets à transporter, le terrain à traverser et la destination, sera comprise entre 5 et 15 centimètres. En section, ils sont de forme circulaire ou ovoïde, avec par exemple un diamètre compris entre 4 et 10 centimètres parallèlement à la face portant au sol.

Si l'on considère deux éléments successifs A et B, on observe le mécanisme d'articulation 10 qui les relie l'un à l'autre, entre l'extrémité postérieure de l'élément A et l'extrémité antérieure de l'élément B.

De cette manière, chaque élément est articulé par son extrémité antérieure sur l'extrémité postérieure de l'élément qui le précède et par son extrémité postérieure sur l'extrémité antérieure de l'élément qui le suit. Seules l'extrémité antérieure du segment de tête et l'extrémité postérieure du segment de queue sont libres. Les articulations se situent sensiblement dans l'axe longitudinal du véhicule considéré dans sa configuration rectiligne de repos.

Le mécanisme 10 est essentiellement constitué par un bras 11 monté fixe en gisement à l'arrière de l'élément A, qui se prolonge dans l'extrémité antérieure de l'élément B par un secteur de roue dentée 12 monté pivotant sur un axe 13 vertical (dans la mesure où le véhicule est en cet endroit sur un sol plan horizontal).

Cet axe d'articulation permet une inclinaison en gisement entre les axes longitudinaux propres des deux éléments restant dans le plan XY de la figure 2. On a prévu d'y ajouter un autre axe d'articulation 14, parallèle au plan de déplacement cette fois, et transversal à la direction des deux éléments en ligne au repos, de sorte qu'il permette en plus une inclinaison en site.

Dans le cas pratique d'application considéré ici, l'inclinaison en site n'est ni commandée, ni même motorisée. Dans tous les éléments intermédiaires, elle permet à la configuration du véhicule en marche de s'adapter librement aux accidents de terrain rencontrés.

Il en est autrement de l'articulation située à l'extrémité postérieure du segment de tête, car dans ce cas, il peut être utile de commander une variation de l'orientation d'initialisation de configuration y compris en site par rapport au sol, pour incliner le segment de tête vers le haut et faciliter ainsi le positionnement du véhicule sur des accidents de terrain, ou l'observation du voisinage à partir des équipements capteurs qu'il porte. La notion de segment de tête peut alors s'étendre à plusieurs éléments, par exemple 4 ou 5, afin de pouvoir contrôler la répartition de l'inclinaison en site nécessaire pour une élévation totale de l'ordre de 50 centimètres sur les commandes de modification d'inclinaison relative entre éléments adressée à plusieurs articulations successives.

D'une manière générale, l'inclinaison relative en site de chaque élément par rapport au précédent (dans le plan XZ de la figure 1) est cependant limitée, à un angle compris entre 20 et 40 degrés par exemple, grâce à la présence d'un boudin d'air gonflable 15. On évite ainsi que le véhicule risque de se tordre sur lui-même quand il redescend d'un monticule qu'il a réussi à gravir, malgré le poids des éléments, grâce au mode de propulsion de l'invention.

L'inclinaison en gisement est, quant à elle, toujours contrôlée et placée sous la commande du système de détermination et commande d'orientation nécessaire à la mise en oeuvre du procédé de propulsion.

A cet effet, les ordres de modification d'inclinaison élaborés suivant ce procédé servent à commander un moteur électrique 18, alimenté par une pile ou batterie 16, dont le mouvement est transmis par des pignons d'engrenage 17 au secteur de roue dentée 12.

Pour une meilleure sécurité de fonctionnement, ces organes d'entraînement motorisé sont portés par une structure rigide de l'élément B suivant celui A dont il s'agit de modifier l'orientation de manière itérative, en recopiant d'élément à élément, séquence par séquence, l'inclinaison prise précédemment par l'articulation précédente, traduisant l'inclinaison relative entre les deux éléments devançant immédiatement les éléments A et B.

Tous ces organes, ainsi que les autres équipements à transporter, dont des capteurs divers, sont enfermés dans un carter rigide 21 propre à chaque élément. Cette enveloppe résistante est complétée entre deux éléments voisins, sans gêner l'articulation, par une liaison mécanique flexible 22, illustrée par des bandes annulaires coulissant les unes sur les autres.

Une telle enveloppe mécanique, indéformable autrement qu'au niveau des articulations, est doublée d'une enveloppe souple 23, qui elle recouvre l'ensemble du véhicule sur toute sa longueur. Elle constitue une enveloppe de protection, isolant en particulier les mécanismes d'articulation de l'extérieur, dans un environnement qui risquerait de les encrasser.

Elle est toutefois conçue et disposée pour se laisser traverser, au moins aux endroits voulus, par les rayonnements utiles au fonctionnement des divers équipements du véhicule, tels les capteurs à rayonnement infrarouge ou autre, émetteurs ou détecteurs.

Conformément à l'invention, on commande les moteurs des moyens d'inclinaison respectivement associés aux différents éléments du véhicule au niveau des articulations entre éléments successifs, de sorte que la configuration du véhicule en marche présente en permanence une forme sinueuse à ondulations latérales de part et d'autre de sa trajectoire moyenne.

En pratique, du moins dans l'exemple préféré considéré ici, on part d'une loi de configuration nominale conduisant théoriquement à une configuration sinusoïdale pour une trajectoire moyenne rectiligne, du moins localement.

L'énergie de modification d'orientation nécessaire pour chaque moteur de réglage d'inclinaison relative entre éléments est donc calculée, en chaque séquence, en fonction de cette loi de configuration nominale, mais aussi en appliquant divers facteurs de correction. En effet, même en cas de trajectoire moyenne rectiligne, les composantes latérales des forces de propulsion introduisent des erreurs d'inclinaison qui pourraient entraîner une déformation progressive de la configuration nominale que l'on entend imposer.

D'autre part, les corrections effectuées permettent de prendre en compte un ordre de cap moyen à suivre par le véhicule, variant en fonction du temps pour le conduire suivant une trajectoire moyenne prédéterminée. Elles permettent aussi de modifier temporairement les commandes en fonction, par exemple, d'informations reçues des équipements capteurs du véhicule quant à la présence d'un obstacle à contourner.

En se reportant aux figures 3 et 4, on considère une séquence quelconque, passant de l'instant t à l'instant t+Δt, et on désigne par α_{*i*} l'orientation d'un élément quelconque *i* (figure 3), exprimée dans les calculs par son angle d'inclinaison relative au niveau de son articulation avec l'élément suivant (figure 4), tout en réservant la désignation α₁ pour l'orientation d'initialisation du segment de tête (figure 3), laquelle est également traduite en pratique par son angle d'inclinaison relative (figure 4) en son articulation sur l'élément suivant (qui est ici le premier des éléments dits intermédiaires).

Le plan XY de la figure 3 est celui des orientations ou inclinaisons relatives en gisement.

La configuration spatiale à forme sinusoïdale demande, hors toute correction et pour une trajectoire moyenne rectiligne, que pour le segment de tête, l'angle d'initialisation α₁ soit déterminé (et commandé par action sur son articulation avec le premier élément intermédiaire) pour suivre la loi sinusoïdale souhaitée *f*(t), et que pour tous les autres éléments, on ait α_{*i*}(t+Δt) = α_{*i-1*}(t), de manière à assurer la reproduction de la courbe de proche en proche.

Cette relation exprime qu'à tout instant t+Δt, l'articulation inclinant l'élément *i* lui confère la même valeur d'angle d'inclinaison relative que celle qu'avait au même endroit l'élément précédent *i-1* à l'instant t précédent, par rapport à l'élément encore précédent *i-2*.

Les calculs effectués font intervenir des combinaisons de matrices qui, pour être à la portée des informaticiens, n'en sont pas moins complexes. C'est pourquoi on a cherché à faire apparaître d'une manière simplifiée sur la figure 4, que les ordres de commande des moteurs délivrés en 48 sont élaborés suivant le principe d'une boucle d'asservissement.

En 47, les valeurs des angles d'inclinaison relative propres aux différentes articulations sont mesurées à un instant donné à l'aide de potentiomètres solidaires mécaniquement des articulations en gisement. Ces valeurs mesurées, rendues disponibles en 41, sont comparées, en 43, à des valeurs de consigne respectives provenant d'un module 42.

Les valeurs de consigne sont élaborées par le module 42 suivant le principe d'une reproduction de courbe de proche en proche entre les instants t et t+Δt, conformément à l'invention.

L'incrément Δt représente la durée du cycle de calcul d'un calculateur numérique contrôlant la boucle d'asservissement. La valeur de l'angle α₁ à affecter à l'articulation du segment de tête est déterminée à chaque cycle en fonction de la courbe de configuration de trajet théorique assignée au véhicule.

La fonction de transfert de la boucle d'asservissement mise en oeuvre en 48 se présente sous forme matricielle, ce qui traduit le fait que les forces s'exerçant au niveau des différentes articulations du véhicule sont mécaniquement interdépendantes.

Les paramètres de cette fonction de transfert peuvent avantageusement être modifiés de cycle à cycle suivant un processus adaptatif dépendant de la nature du terrain. Les éléments servant de base à un tel calcul adaptatif peuvent être par exemple, comme il est admis dans le cas particulier considéré, les mesures des consommations électriques des différents moteurs du véhicule.

Pour prendre en compte, au-delà de la commande mécanique des moteurs d'inclinaison, une déviation toujours possible en direction moyenne absolue dans l'espace, on peut notamment prévoir une correction de rétablissement d'orientation qui s'effectue à partir d'une indication de direction effective α_{*m*}, fournie par exemple par boussole. La correction est suffisante si on se contente de l'effectuer en correspondance avec des directions moyennes couvrant plusieurs éléments de place en place le long du véhicule.

Lors du démarrage du véhicule, à supposer que celui-ci parte d'une configuration rectiligne de repos, l'application du procédé qui vient d'être décrit assure de lui-même que les angles d'inclinaison successifs dans le temps imposés à l'articulation du segment de tête en correspondance avec l'amplitude d'ondulation de la configuration sinueuse nominale, soient retransmis avec déformation du véhicule de proche en proche de la tête vers la queue.

La figure 4 illustre, dans le cadre d'un exemple de mise en oeuvre particulièrement complet du procédé de l'invention, le fait que tout au long des déplacements du véhicule en marche, on affecte les calculs d'itération de divers facteurs de correction.

L'arrivée d'un instant à l'autre des valeurs d'initialisation en consignes de configuration attribuées à la valeur α₁ pour la modification d'inclinaison relative propre au segment de tête est symbolisée en 45 comme prenant en compte des ordres de modification de cet angle pour faire varier la configuration nominale par reproduction de proche en proche à partir du segment de tête. De tels ordres peuvent provenir tant d'équipements capteurs installés sur le véhicule que d'un opérateur agissant depuis un poste de télécommande.

Il est appliqué par ailleurs un facteur de correction du cap moyen suivi, élaboré en 44, d'après des ordres de cap instantané provenant pour partie des équipements capteurs du véhicule et pour partie d'un poste de télécommande de pilotage, ainsi qu'un facteur de correction pour présence d'obstacle, élaboré en 46, par lequel on modifie la trajectoire à suivre en fonction d'obstacles détectés obligeant à les faire contourner par le véhicule, en agissant sur la commande d'orientation du segment de tête et/ou sur celle destinée à un ou plusieurs autres éléments.

Avec l'aide des figures, on a ainsi expliqué comment les moyens d'itération et les moyens d'initialisation du véhicule de l'invention se trouvent intégrés dans un système de commande automatique à calculs programmés, élaborant et délivrant les ordres de modification des angles d'inclinaison, de manière à établir la configuration prédéfinie et à la corriger en permanence pour l'entretenir tout au long du véhicule en marche.

En fonctionnement, le véhicule décrit est capable de se déplacer sur un sol ferme ou meuble, par le jeu des contraintes qui s'opposent à au déplacement latéral, du fait qu'il se reconfigure en permanence pour respecter les ondulations du trajet qu'il suit. En effet, sa longueur a pour conséquence, en liaison avec l'amplitude et la période des ondulations, que la résultante moyenne des forces de propulsion est orientée plus longitudinalement que latéralement par rapport à l'axe de la configuration.

Sa vitesse selon la trajectoire moyenne (Δx sur la figure 3) dépend essentiellement du rythme des séquences itératives (incrément de temps Δt), pour une configuration donnée. Cette dernière est par exemple établie, par les commandes automatiques d'initialisation et d'entretien par itération, de sorte que sa pente par rapport à l'axe X soit de l'ordre de 45 degrés aux points d'inflexion de la courbe.

Alors que dans la réalisation ci-dessus, les éléments présentent une surface portant sur le sol qui est décrite régulière, la figure 5 illustre l'un des moyens que l'on peut y ajouter pour favoriser la création de forces de propulsion sélectivement longitudinales.

Dans ce cas, les éléments sont de section extérieure 31 ovale plutôt que circulaire, ce qui permet d'augmenter leur capacité volumique interne, quitte à ce que le poids à véhiculer en soit d'autant augmenté. Principalement, ils sont en outre équipés de roulettes ou galets 32, qui entrent en fonction quand le même véhicule se déplace sur un sol se comportant pour lui comme un sol lisse, n'entraînant pas directement de contraintes s'opposant à un déplacement latéral.

Etant montés sur un axe de rotation libre parallèle au sol, de tels galets, constitués à cette fin en un matériau tel que du caoutchouc, constituent des organes de frottement latéral au sol. Ils offrent une résistance supplémentaire au glissement en déplacement latéral tout en favorisant le déplacement dans le sens longitudinal par leur capacité de roulement.

Quoi qu'il en soit, pour être particulièrement avantageux, le mode de réalisation particulier décrit n'en est pas moins non limitatif, et diverses variantes, concernant notamment les détails qui ont été indiqués en exemples, resteront dans le cadre de l'invention objet du brevet.

## Revendications

1. Procédé de propulsion d'un véhicule à déplacement par reptation, essentiellement constitué par une série d'éléments articulés entre eux, caractérisé en ce que l'on détermine périodiquement l'orientation des éléments successifs suivant des séquences répétitives dans le temps au cours desquelles on impose à chaque élément une orientation tendant à reproduire itérativement l'orientation que présentait l'élément le précédant dans ladite série à la séquence précédente, et en ce que l'on commande l'orientation d'un segment de tête en la faisant varier au cours du temps suivant une loi d'initialisation qui est ainsi transmise de proche en proche par lesdits éléments et qui est déterminée de sorte à donner à l'ensemble du véhicule en marche une configuration spatiale définie suivant un trajet sinueux à ondulations latérales alternativement de part et d'autre d'une trajectoire moyenne.

2. Procédé suivant la revendication 1, caractérisé en ce que l'orientation de chaque élément est réglée par modification d'un angle d'inclinaison relative entre éléments successifs commandant au moins l'inclinaison en gisement de chaque élément relativement aux éléments immédiatement adjacents dans ladite série.

3. Procédé suivant la revendication 1 ou 2, caractérisé en ce que ladite loi d'initialisation est déterminée de sorte à imposer en permanence que ladite configuration spatiale soit établie suivant un trajet à ondulations sinusoïdales pour une trajectoire moyenne localement rectiligne.

4. Procédé suivant l'une des revendications 1 à 3, caractérisé en ce qu'à chaque séquence, on détermine la commande de l'orientation d'initialisation du segment de tête, de préférence par réglage de l'angle d'inclinaison relative entre éléments successifs suivant la revendicatiion 2, en fonction d'une direction de cap moyen et/ou d'une trajectoire moyenne à suivre par ladite configuration spatiale.

5. Procédé suivant l'une des revendications 1 à 4, caractérisé en ce qu'à chaque séquence, on corrige la détermination de l'orientation itérative imposée à chaque élément en fonction d'erreurs affectant en fonctionnement la transmission de la définition nominale initiale donnée à ladite configuration.

6. Procédé suivant l'une des revendications 1 à 5, caractérisé en ce que, de préférence par réglage de l'angle d'inclinaison relative entre éléments successifs suivant la revendication 2, on corrige l'orientation affectée au segment de tête et/ou la définition de ladite configuration, en cas de détection d'un obstacle à contourner par le véhicule.

7. Procédé suivant l'une des revendications 1 à 6, caractérisé en ce que ladite configuration est établie de sorte à impliquer de 5 à 10 éléments par ondulation latérale.

8. Procédé suivant l'une des revendications 1 à 7, caractérisé en ce que ladite configuration est établie de sorte à présenter par rapport à un axe de trajectoire moyenne une pente en ses points d'inflexion comprise entre 40 et 60 degrés.

9. Véhicule à déplacement par reptation, essentiellement constitué par une série d'éléments articulés entre eux, caractérisé en ce qu'en vue de sa propulsion par mise en oeuvre du procédé suivant l'une des revendications 1 à 8, il comporte des moyens (10) de commande de variations réglables de l'orientation de chaque élément, agissant notamment sur des moyens d'articulation le reliant aux éléments immédiatement adjacents dans ladite série, des moyens d'itération (47,48,49) tendant à imposer à chaque élément (B), à chacune de séquences répétitives, l'orientation qu'avait l'élément précédent (A) de la série à la séquence précédente et des moyens d'initialisation (41) pour faire varier au cours du temps l'orientation d'un segment de tête (S) suivant une loi d'initialisation telle que, par transmission itérative d'élément à élément, le véhicule en marche suive une configuration spatiale de trajet sinueux prédéterminée.

10. Véhicule selon la revendication 9, caractérisé en ce que lesdits moyens de variation d'orientation comportent, sur chaque élément, des moyens motorisés (16,17,18) de modification de l'inclinaison en gisement de l'élément le précédant dans ladite série pour commander une articulation (11,13) les reliant l'un à l'autre.

11. Véhicule selon la revendication 9 ou 10, caractérisé en ce qu'il comporte de 10 à 50 éléments dans ladite série.

12. Véhicule selon l'une des revendications 9 à 11, caractérisé en ce chaque élément comporte des organes (32) de frottement latéral au sol.

13. Véhicule selon l'une des revendications 9 à 12, caractérisé en ce qu'il comporte des moyens automatiques (42) de correction de ladite configuration sur la longueur du véhicule en marche.

14. Véhicule selon l'une des revendications 9 à 13, caractérisé en ce qu'il comporte des moyens (14) d'articulation entre éléments qui sont libres en site.

15. Véhicule selon l'une des revendications 9 à 14, caractérisé en ce qu'il comporte en outre des moyens de commande d'une orientation en site dudit segment de tête (S).

16. Véhicule selon l'une des revendications 9 à 15, caractérisé en ce qu'il comporte des moyens pour limiter l'inclinaison relative entre éléments successifs à un maximum compris 40 et 60 degrés en gisement et à un maximum compris entre 20 et 40 degrés en site.

17. Véhicule selon l'une des revendications 9 à 16, caractérisé en ce que lesdits moyens d'itération et lesdits moyens d'initialisation font partie d'un système de commande automatique à calculs programmés élaborant des ordres de commande délivrés auxdits moyens de commande de variations réglables d'orientation des éléments, pour établir et entretenir ladite configuration, notamment en déterminant des modifications à appliquer aux angles d'inclinaison relative entre éléments successifs au niveau desdits moyens d'articulation.

18. Véhicule suivant la revendication 17, caractérisé en ce qu'il comporte en outre des moyens de correction desdits ordres de commande en fonction d'un ordre de cap moyen instantané et/ou de la présence détectée d'un obstacle à contourner, et/ou d'une erreur affectant la direction effective de trajectoire moyenne.

19. Véhicule suivant la revendication 17 ou 18, caractérisé en ce qu'il comporte en outre des moyens de modification de valeurs de consigne de configuration nominale affectés à l'orientation du segment de tête, donc notamment à l'angle d'inclinaison relative entre les éléments successifs le constituant, à partir de capteurs installés sur le véhicule et/ou d'un poste de télécommande.

## Patentansprüche

1. Verfahren zum Antrieb eines Fahrzeugs nach Schlangenart, wobei das Fahrzeug im wesentlichen aus einer Reihe von miteinander gelenkig verbunden Gliedern besteht, dadurch gekennzeichnet, daß periodisch die Ausrichtung der aufeinanderfolgenden Glieder gemäß sich zeitlich wiederholenden Sequenzen bestimmt, in deren Verlauf jedem Glied eine Ausrichtung verliehen wird, die iterativ die Ausrichtung des in der Reihe vorhergehenden Glieds während der letztvorhergehenden Sequenz reproduzieren soll, und daß man die Ausrichtung eines Kopfsegments steuert, indem man die Ausrichtung gemäß einem Initialisierungsgesetz zeitlich variieren läßt, das so von Glied zu Glied weiter übertragen wird und so festgelegt ist, daß die Gesamtheit des Fahrzeugs im Betrieb eine räumliche Konfiguration annimmt, die durch einen sinusförmigen Verlauf mit seitlichen Halbwellen abwechselnd zu beiden Seiten eines mittleren Wegs definiert ist.

2. Verfahren nach Anspruch 1, dadurch gekennzeichnet, daß die Ausrichtung jedes Glieds durch Veränderung eines relativen Neigungswinkels zwischen aufeinanderfolgenden Gliedern geregelt wird, wodurch zumindest die Neigung jedes Glieds bezüglich der unmittelbar benachbarten Glieder in der Reihe in Azimutrichtung gesteuert wird.

3. Verfahren nach Anspruch 1 oder 2, dadurch gekennzeichnet, daß das Initialisierungsgesetz so bestimmt ist, daß permanent die räumliche Konfiguration gemäß einem Verlauf mit sinusförmigen Wellen für einen lokal geradlinigen mittleren Weg vorgegeben wird.

4. Verfahren nach einem der Ansprüche 1 bis 3, dadurch gekennzeichnet, daß in jeder Sequenz die Steuerung der Initialisierungsausrichtung des Kopfsegments, vorzugsweise durch Regelung des relativen Neigungswinkels zwischen aufeinanderfolgenden Gliedern nach Anspruch 2 in Abhängigkeit von einer mittleren Zielrichtung oder einem mittleren Weg bestimmt wird, den die räumliche Konfiguration verfolgen soll.

5. Verfahren nach einem der Ansprüche 1 bis 4, dadurch gekennzeichnet, daß in jeder Sequenz die Bestimmung der iterativen Ausrichtung, die jedem Glied vorgegeben wird, abhängig von Fehlern korrigiert wird, die im Betrieb die Übertragung der ursprünglichen Nenn-Definition verändern, die der Konfiguration verliehen wurde.

6. Verfahren nach einem der Ansprüche 1 bis 5, dadurch gekennzeichnet, daß die dem Kopfsegment zugewiesene Ausrichtung und/oder die Definition der Konfiguration bei Erfassung eines vom Fahrzeug zu umfahrenden Hindernisses korrigiert wird, vorzugsweise durch Regelung des relativen Neigungswinkels zwischen aufeinanderfolgenden Gliedern nach Anspruch 2.

7. Verfahren nach einem der Ansprüche 1 bis 6, dadurch gekennzeichnet, daß die Konfiguration so gebildet wird, daß zwischen fünf und zehn Glieder jede seitliche Halbwelle bilden.

8. Verfahren nach einem der Ansprüche 1 bis 7, dadurch gekennzeichnet, daß die Konfiguration so gebildet wird, daß bezüglich einer mittleren Wegachse eine Neigung an den Wendepunkten zwischen 40° und 60° entsteht.

9. Fahrzeug zur Bewegung nach Schlangenart, im wesentlichen bestehend aus einer Reihe von aneinander angelenkten Gliedern, dadurch gekennzeichnet, daß es für einen Antrieb durch Anwendung des Verfahrens nach einem der Ansprüche 1 bis 8 Mittel (10) zur Steuerung von regelbaren Veränderung der Ausrichtung jedes Glieds, die insbesondere auf Gelenkmittel einwirken, die das Glied mit den unmittelbar benachbarten Gliedern in der Reihe verbinden, Iterationsmittel (47, 48, 49), die jedem Glied (B) in jeder der sich wiederholenden Sequenzen dieselbe Ausrichtung verleihen, die das vorhergehende Glied (A) in der Reihe während der vorhergehenden Sequenz eingenommen hatte, und Initialisierungsmittel (41) aufweist, die die Ausrichtung eines Kopfsegments (S) gemäß einem Initialisierungsgesetz so zeitlich variieren läßt, daß durch iterative Übertragung von einem Glied zum nächsten das Fahrzeug in der Bewegung eine vorbestimmte räumliche Konfiguration mit sinusförmigem Verlauf annimmt.

10. Fahrzeug nach Anspruch 9, dadurch gekennzeichnet, daß die Mittel zur Veränderung der Ausrichtung an jedem Glied Antriebsmittel (16, 17, 18) zur Veränderung der Neigung bezüglich des vorhergehenden Glieds in der Reihe in Azimutrichtung aufweist, um ein Gelenk (11, 13) zu steuern, das die beiden Glieder verbindet.

11. Fahrzeug nach Anspruch 9 oder 10, dadurch gekennzeichnet, daß es zwischen zehn und fünfzig Glieder in der Reihe enthält.

12. Fahrzeug nach einem der Ansprüche 9 bis 11, dadurch gekennzeichnet, daß jedes Glied Organe (32) enthält, die auf dem Boden seitliche Reibungskräfte entwickeln.

13. Fahrzeug nach einem der Ansprüche 9 bis 12, dadurch gekennzeichnet, daß es Mittel (42) zur automatischen Korrektur der Konfiguration über die Länge des in Bewegung befindlichen Fahrzeugs aufweist.

14. Fahrzeug nach einem der Ansprüche 9 bis 13, dadurch gekennzeichnet, daß es Mittel (14) zur gelenkigen Verbindung zwischen Gliedern aufweist, die in Elevationsrichtung frei beweglich sind.

15. Fahrzeug nach einem der Ansprüche 9 bis 14, dadurch gekennzeichnet, daß es außerdem Mittel zur Steuerung einer Ausrichtung des Kopfsegments (S) in Elevationsrichtung aufweist.

16. Fahrzeug nach einem der Ansprüche 9 bis 15, dadurch gekennzeichnet, daß es Mittel zur Begrenzung der relativen Neigung zwischen aufeinanderfolgenden Gliedern auf einem Höchstwert zwischen 40° und 60° in Azimutrichtung und einen Höchstwert zwischen 20° und 40° in Elevationsrichtung aufweist.

17. Fahrzeug nach einem der Fahrzeuge 9 bis 16, dadurch gekennzeichnet, daß die Iterationsmittel und die Initialisierungsmittel Teil eines automatischen Steuersystems mit Rechenprogrammen sind, das Steuerbefehle erarbeitet und an die Mittel zur Steuerung der regelbaren Veränderungen der Ausrichtung der Glieder liefert, um die Konfiguration zu bilden und zu erhalten, indem insbesondere die auf die relativen Neigungswinkel zwischen aufeinanderfolgenden Gliedern in Höhe der Gelenkmittel anzuwendenden Veränderungen bestimmt werden.

18. Fahrzeug nach Anspruch 17, dadurch gekennzeichnet, daß es weiter Mittel zur Korrektur der Steuerbefehle abhängig von einem Befehl für ein augenblickliches mittleres Ziel und/oder abhängig von einem zu umfahrenden Hindernis und/oder von einem Fehler aufweist, dem die tatsächliche Richtung des mittleren Wegs unterliegt.

19. Fahrzeug nach Anspruch 17 oder 18, dadurch gekennzeichnet, daß es außerdem Mittel zur Veränderung von Sollwerten der Nennkonfiguration aufweist, die an die Ausrichtung des Kopfsegments angelegt werden, also insbesondere bezüglich des relativen Neigungswinkels zwischen aufeinanderfolgenden Gliedern der Konfiguration ausgehend von auf dem Fahrzeug und/oder in einem Fernsteuerungsposten installierten Sonden.

## Claims

1. Method for the propulsion of a vehicle with movement by reptation, said vehicle being essentially constituted by a series of elements articulated with one another, characterised by periodically determining the orientation of the successive elements according to sequences, repetitive in time, in the course of which an orientation is imposed on each element, this orientation tending towards the iterative reproduction of the orientation that was had by the element preceding it in said series at the previous sequence, and by controlling the orientation of a head segment by making it vary in the course of time according to a law of initialisation that is thus transmitted step by step by said elements and that is determined so as to give the entire vehicle in operation a defined spatial configuration along a sinuous path with lateral undulations alternately on either side of a mean trajectory.

2. Method according to claim 1, characterised in that the orientation of each element is adjusted by the modification of an angle of relative inclination between successive elements controlling at least the inclination in relative bearing of each element with respect to the immediately adjacent elements in said series.

3. Method according to either claim 1 or 2, characterised in that said law of initialisation is determined so as to permanently ensure that said spatial configuration is established according to a path with sinusoidal undulations for a locally rectilinear mean trajectory.

4. Method according to any of claims 1 to 3, characterised in that, at each sequence, the command for the initialising orientation of the head segment is determined, preferably by adjustment of the angle of relative inclination between successive elements according to claim 2, as a function of a mean course direction and/or a mean trajectory to be followed by said spatial configuration.

5. Method according to any of claims 1 to 4, characterised in that, at each sequence, a correction is made of the determining of the iterative orientation imposed on each element as a function of errors which, in operation, affect the transmission of the initial nominal definition given to said configuration.

6. Method according to any of claims 1 to 5, characterised in that, preferably by adjustment of the angle of relative inclination between successive elements according to claim 2, a correction is made to the orientation assigned to the head segment and/or the definition of said configuration, in the event of the detection of an obstacle to be circumvented by the vehicle.

7. Method according to any of claims 1 to 6, characterised in that said configuration is set up so as to involve five to ten elements per lateral undulation.

8. Method according to any of claims 1 to 7, characterised in that said configuration is set up so as to have, with respect to an axis with a mean trajectory, a slope at its points of change of curve ranging from 40 to 60 degrees.

9. Vehicle with movement by reptation, essentially constituted by a series of elements articulated with one another, characterised in that, with a view to its propulsion by implementation of the method according to one of claims 1 to 8, said vehicle comprises means (10) for controlling adjustable variations of the orientation of each element, acting especially on means of articulation connecting it to the immediately adjacent elements in said series, means of iteration (47, 48, 49) tending to impose, on each element (B), at each of the repetitive sequences, the orientation that was had by the preceding element (A) of the series at the preceding sequence, and means of initialisation (41) to bring about a variation in the course of time of the orientation of a head segment (S) according to the law of initialisation such that, by iterative transmission from element to element, the vehicle in operation follows a spatial configuration with a predetermined sinuous path.

10. Vehicle according to claim 9, characterised in that said means for the variation of orientation comprise, on each element, motor-driven means (16, 17, 18) for modifying the inclination in relative bearing of the element preceding it in said series to control an articulation joint (11, 13) connecting them to each other.

11. Vehicle according to claim 9 or 10, characterised in that it comprises 10 to 50 elements in said series.

12. Vehicle according to any of claims 9 to 11, characterised in that each element comprises devices (32) for lateral friction with the ground.

13. Vehicle according to any of claims 9 to 12, characterised in that it comprises automatic means (42) for the correction of said configuration on the length of the vehicle in operation.

14. Vehicle according to any of claims 9 to 13, characterised in that it comprises means (14) of articulation between elements that are free in elevation.

15. Vehicle according to any of claims 9 to 14, characterised in that it further comprises means for controlling an orientation in elevation of said head segment (S).

16. Vehicle according to any of claims 9 to 15, characterised in that it comprises means for limiting the relative inclination between successive elements to a maximum of 40 to 60 degrees in relative bearing and a maximum of 20 to 40 degrees in elevation.

17. Vehicle according to any of claims 9 to 16, characterised in that said means of iteration and said means of initialisation form part of a system of automatic control with programmed computations, preparing commands delivered to said means for controlling adjustable variations of orientation of the elements, to set up and maintain said configuration, especially by determining modifications to be applied to the angles of relative inclination between successive elements at said articulation means.

18. Vehicle according to claim 17, characterised in that it further comprises means for the correction of said commands as a function of a command relating to an instantaneous mean course and/or the detected presence of an obstacle to be circumvented and/or an error affecting the effective direction of a mean trajectory.

19. Vehicle according to claim 18, characterised in that it further comprises means for modifying instructed values of nominal configuration assigned to the orientation of the head segment, hence especially to the angle of relative inclination between the successive elements constituting it, by means of sensors installed on the vehicle and/or of a remote-control station.
